# EUROPEAN PATENT SPECIFICATION

(11) **EP 3 556 578 B1**
(45) Date of publication and mention of the grant of the patent: **19.05.2021**
(21) Application number: 19164533.2
(22) Date of filing: 22.03.2019
(51) Int. Cl.: B60C 25/05, B60C 25/138

(54) **METHOD AND MACHINE FOR TREATING A TIRED WHEELS**
VERFAHREN UND MASCHINE ZUR BEHANDLUNG VON BEREIFTEN RÄDERN
PROCÉDÉ ET MACHINE DE TRAITEMENT DE ROUES À PNEUMATIQUE

(30) Priority: 17.04.2018 IT 201800004624
(43) Date of publication of application: 23.10.2019
(73) Proprietor: Butler Engineering & Marketing S.p.A., 42047 Rolo, Reggio Emilia (IT)
(72) Inventor: GONZAGA, Tullio, 42015 Correggio (Reggio Emilia) (IT); TAROZZI, Cristiano, 42010 Rio Saliceto (Reggio Emilia) (IT)
(74) Representative: PGA S.p.A., Milano, Succursale di Lugano

(56) References cited:
- EP-A1- 3 000 627
- US-B1- 8 613 303

## Description

### TECHNICAL FIELD OF THE INVENTION

The present invention relates to a method and a machine for treating tired wheels.

### PRIOR ART

The machines for removing or installing tires on the rims are equipped with rotating platforms or clamps on which a wheel rim or the tire-tire assembly is locked, then rotating it, while appropriate tools perform the required operation, such as bead breaking or assembly-disassembly.

The platforms are normally powered by an electric, pneumatic or hydraulic motor with constant power, designed to rotate the platform.

The wheels that are disassembled and reassembled with such machines may have rims with diameters that are very different, ranging from 10 inches (254 mm) to 30 inches (762 mm) for cars and from 11 inches (280 mm) to 52 inches (1320 mm) for trucks and agricultural transport vehicles.

It is therefore evident that, given the great difference between the diameters of the rims that can be processed, since the power applied by the motor of the platform is constant, there is a great variation of peripheral speed and tangential force applied to the wheels to be treated according to the dimensions of the latter.

In light of this, the peripheral speed at the tool intervention zone and the tangential force applied by the same is very different from the ideal one.

More specifically, given the same rotation speed of the platform, the peripheral speed at the outer edge of the wheel increases with increasing diameter of the respective rim, while the peripheral force applied by the tools, given the same torque, decreases as the diameter increases.

This entails a great difference both in speed and in force applied to the wheels, which can compromise the integrity of the tires of the same, as well as the efficiency of the treatments to be performed.

In this regard, in machines for treating car wheels, the variation of the force applied between wheels with a minimum diameter and wheels with a maximum diameter can be 300%, while in the machines for the treatment of truck wheels or agricultural transport vehicles wheels this variation can reach 500%.

US8613303B1 and EP3000627A1 disclose solutions according to the state of the art.

### OBJECTS OF THE INVENTION

The object of the present invention is therefore to provide a new machine and a new method for the treatment of tired wheels.

Another object of the present invention is to provide a machine and a method as above that allow processing wheels of any size without damaging them.

Another object of the present invention is to provide a machine and a method as above that are capable of adapting the respective components to process wheels of any size or, better, wheels with rims having any radius or diameter.

Another object of the present invention is to provide a machine which has or may have less resistant tools than traditional machines, but which are nevertheless capable of guaranteeing efficient operation.

According to one aspect of the invention, a machine according to claim 1 is provided.

The dependent claims relate to preferred and advantageous exemplary embodiments of the invention.

### BRIEF DESCRIPTION OF THE DRAWINGS

Further features and advantages of the invention will become apparent from the description of embodiments of machine and a method for the treatment of tired wheels, illustrated by way of example on the basis of the accompanying drawings, in which:
- figures 1 and 2 show a machine according to the present invention in respective working trims;
- figures 3 and 4 show another embodiment example of a machine according to the present invention in respective working trims;

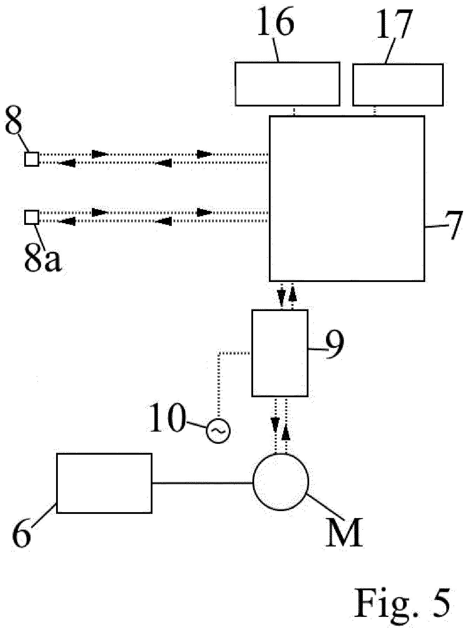

- figure 5 shows a block diagram of the control system in a machine according to the present invention.

In the accompanying drawings, equal parts or components are designated by the same reference numerals.

### EMBODIMENTS OF THE INVENTION

With reference to the accompanying figures, a machine 1 for treating a tired wheel TW according to the present invention comprises at least a base 2, at least a column 3 projecting from the base 2, at least one tool-holder arm 4a, 4b, 4c supported by the column 3 and one or more work tools 5a, 5b, 5c such as a bead removal roller and/or a mounting and/or dismounting tool, supported by or articulated to a respective tool-holder arm 4a, 4b, 4c.

Actuator means AM are provided, such as hydraulic, pneumatic, electric or other actuators, of one or more arms 4a, 4b, 4c for their displacement along the column or the respective column 3 and/or pivoting with respect to the column 3, as well as any actuator means, such as hydraulic, pneumatic, electric or other actuators, of one or more work tools 5a, 5b, 5c with respect to the respective arm 4a, 4b, 4c.

Clearly, one or more tools may also be idly pivoted to the respective arm or one or more tools may be articulated or pivoted directly or with interposition of another component to the respective arm, so as to be angularly displaceable as a function of the reaction force imparted thereto by a rim and/or tire of a tired wheel during the treatment of the latter, as taught for example by EP1714807A1, EP2524821A1 or EP2875969A1.

Moreover, pedals or control buttons of the actuators, drive means or motors of the components of the machine may be provided, or alternatively or in addition to this, remote control of such elements.

The machine could also be structured in such a way that the movement of the arms 4a, 4b, 4c along the column or the respective column 3 and/or pivoting with respect to the column 3, as well as the tools 5a, 5b, 5c may be carried out manually from an operator.

The machine 1 then comprises supporting and constraining means 6 supported by the base 2 for the support and constraint of a wheel rim W of or for a tired wheel TW, such supporting and constraining means 6 are designed to support a wheel rim W or a tired wheel TW with vertical rotation and symmetry axis, horizontal or inclined with respect to the vertical. More particularly, the supporting and constraining means 6 are designed to support and constrain a rim W or a tired wheel TW with rotation and symmetry axis, preferably vertical or inclined in use, for example by about 10°-40° with respect to the vertical, but possibly also horizontal.

The supporting and constraining means 6 or at least a respective component, such as a platform, a table, jaws or a mandrel, are preferably rotatable about a rotation axis. Alternatively or in addition to this, the work tool 5a, 5b, 5c may be mounted rotatably about the supporting and constraining means 6 or better so as to guide it along a predefined path around the supporting and constraining means 6.

The supporting and constraining means 6 may comprise a wheel-holder table or platform, possibly delimiting an axial hole, for example supported by a respective upright projecting from the base; the supporting and constraining means 6 may also comprise a centering cone member with shaft insertable in the axial opening of a rim W mounted on the table and engageable in the axial hole of the latter so as to tighten the rim W and therefore the wheel TW between the cone member and the table. Alternatively, the supporting and constraining means 6 may include a clamp jaw unit or a mandrel.

The machine then comprises motor means M, for example one or more hydraulic, pneumatic or electric motors, possibly asynchronous, such as a three-phase asynchronous electric motor or another type, for driving or dragging into rotation the supporting and constraining means 6, so that the supporting and constraining means 6 are rotatable so as to be able to drive a wheel rim or a tired wheel mounted thereon around a rotation axis which, in use, corresponds to the axis of rotation and symmetry of the rim or of the tired wheel. The motor means M may be housed within the base 2 or on a base.

Clearly, a gearmotor or means for transmitting motion from the motor means M to the supporting and constraining means 6 or to the table may also be present in the machine 1.

As an alternative or in addition to what has now been indicated, motor means may be provided arranged for driving the tools 5a, 5b, 5c about the supporting and constraining means 6 in rotation or sliding, in which case the tools 5a, 5b, 5c could be mounted on sliding supports on special guides or they could be mounted on shafts mounted rotatably within an axial hole of the wheel-holder table.

Also provided in the machine are at least one electronic control unit 7 as well as detector means 8 for detecting the radius or diameter of a rim W or data or information, such as movements or displacements as will be better described below, correlated or correlatable by the electronic control unit 7 to the radius or diameter of a rim W on the supporting and constraining means 6 and/or means for entering or communicating the radius or diameter of a rim W on the supporting and constraining means 6 in/to the electronic control unit 7 or in/to a respective portion or sub-unit.

The expression "data or information, such as movements or displacements, correlated or correlatable by the electronic control unit 7 to the radius or diameter of a wheel rim (W)" indicates data or information from which the unit 7 can derive or obtain the value of the radius or diameter.

Moreover, the electronic card or the electronic control unit 7 is designed to control the motor means M so as to vary or set or so that they vary or set, in fact automatically or without the intervention of an operator, in particular to a specific or predetermined value, the speed of rotation or displacement of the supporting and constraining means 6 and/or of the work tool 5a, 5b, 5c about the supporting and constraining means 6 according to the radius or the diameter of the rim W communicated thereto, in particular by the detection means 8 or calculated thereby, according to the data or information obtained from the detection means 8 or from the input means 8a. Of course, with reference to this aspect, by speed of rotation or displacement of the supporting and constraining means 6 it is meant the speed of rotation of the wheel-holder table or of the jaws or of a mandrel or in any case of the component of the supporting and constraining means 6 intended to come into engagement or grip on a wheel rim.

Advantageously, the electronic card or the electronic control unit 7 is intended to control the motor means M so as to vary or set the rotation speed as above so that the motor means M set for each radius or diameter of rims or range of radii or diameters of rims a respective speed of rotation of the supporting and constraining means 6 and/or a respective speed of rotation or sliding of the work tool or tools 5a, 5b, 5c around the supporting and constraining means 6, which will be lower than that set or settable for radii or diameters or ranges of radii or diameters (of rims) lower and higher than the one set or settable for larger radii or diameters or ranges of radii or diameters (of rims).

With reference to this aspect, as indicated above, the control unit 7 for a first radius or diameter or first range of radii or diameters is preferably designed to control the motor means M so as to always set the same speed of rotation of the supporting and constraining means 6 and/or the same speed of rotation or sliding of the work tool or tools 5a, 5b, 5c around the supporting and constraining means 6, which will be different (smaller or greater on the basis of the foregoing) of that speed set or settable for rims with a second radius or diameter or second range of radii or diameters or in general with different radii or diameters or range of radii or diameters.

The expression "speed of rotation of the supporting and constraining means 6" refers to the speed of rotation set by the motor means M initially or in any case before the tools begin to process (for example to assemble or disassemble) a tired wheel, since, as is known, during the process, the interaction or the friction between tools and rim and/or tire can cause a slowing down of the supporting and constraining means 6.

With the expression "speed of rotation or sliding of the work tool or tools 5a, 5b, 5c around the supporting and constraining means 6" it is intended the speed of rotation or sliding or displacement set by respective motor means initially or in any case before the tools begin to process (for example, assemble or disassemble) a tired wheel, since, as is known, during the process, the interaction or the friction between tools and rim and/or tire can cause a slowing of the displacement or sliding of the work tool or tools 5a, 5b, 5c around the supporting and constraining means 6.

Preferably, the expression "range of radii or diameters" refers to all those rims having a radius or diameter which is variable or different from each other by less than 5%, 8%, 10% or 15%.

Advantageously, the electronic control unit 7 is designed to control the motor means M so as to maintain substantially constant or in any case variable by less than 5% or 10% the relative peripheral speed (always initially) between the supporting and constraining means 6 and the work tools 5a, 5b, 5c at the outer edge of the wheels to be treated and the peripheral force applied by the tools for processing, for example assembling/disassembling a wheel, regardless of the radius or diameter of the wheel rims W treated in the machine or in any case also for the treatment (in successive moments) of rims W of radius or diameter much different from each other. Of course, the outer edge of the wheels to be treated depends on the diameter or radius of the respective rim.

Preferably, the machine 1 may be provided with an inverter 9 designed to vary the power frequency of the motor means M, so as to adjustably increase or decrease, as desired, the speed of rotation of the supporting and constraining means 6 and/or the speed of rotation or sliding of the work tool or tools 5a, 5b, 5c around the supporting and constraining means 6. Clearly, the action of the inverter 9 also guarantees a variation of the maximum torque applied to the supporting and constraining means 6.

The inverter 9 can intercept the power supply from the grid or from a generator 10 to the motor means M.

Clearly, the inverter 9 is driven by the electronic card or the electronic control unit 7, if desired by appropriate software, according to the values detected by the detection means 8 and/or obtained from the input or communication means 8a.

The inverter 9 is able to vary the supply frequency of the motor means M so as to obtain multiple, for example three, four, five, six or more, even up to 10, 20, 30, 40 or more rotation speed values of the supporting and constraining means 6 and/or of one or more tools 5a, 5b, 5c around the latter.

In essence, the electronic control unit 7 according to the radius or diameter of the rim W obtained from the detection 8 or input 8a means or calculated on the basis of the data or information received from them, establishes the desired speed of rotation or the work conditions required for the supporting and constraining means 6 and/or the speed of rotation or sliding of the work tool or tools 5a, 5b around the supporting and constraining means 6 and consequently sets the inverter 9 or dialogues accordingly with a microprocessor of the inverter 9, so that the inverter 9, if necessary, varies the frequency of the supply voltage of the motor M.

The electronic control unit 7 can establish the desired rotation speed (always initially as indicated above) or the work conditions also according to the type of treatment to be performed on the wheel TW, for example assembly or disassembly, that is to say, the optimal or desired rotation speed can be a function of the radius or diameter of the rim W or of the treatment to be carried out, in which case the treatment to be carried out can be set and then the radius or diameter detected/entered (radius/diameter that must in any case be detected or entered) or vice versa.

The detection means 8 for detecting the radius or the diameter of a rim may comprise, for example, an encoder, a potentiometer, a caliper, a camera, a laser and/or a chip reading means in a tire of a wheel to be treated.

The means for injecting or communicating the radius or the diameter of the rim may instead comprise, for example, a keyboard 17 or other input means. An input or communication means, a mouse connected to the control unit 7 or a tablet, a smartphone and/or a touch screen display or similar means or means for acquiring voice messages may also be provided.

The detection means 8 may, for example, be supported by a telescopic arm or by an arm pivoted to a respective column or upright or by a tool or other element of the machine.

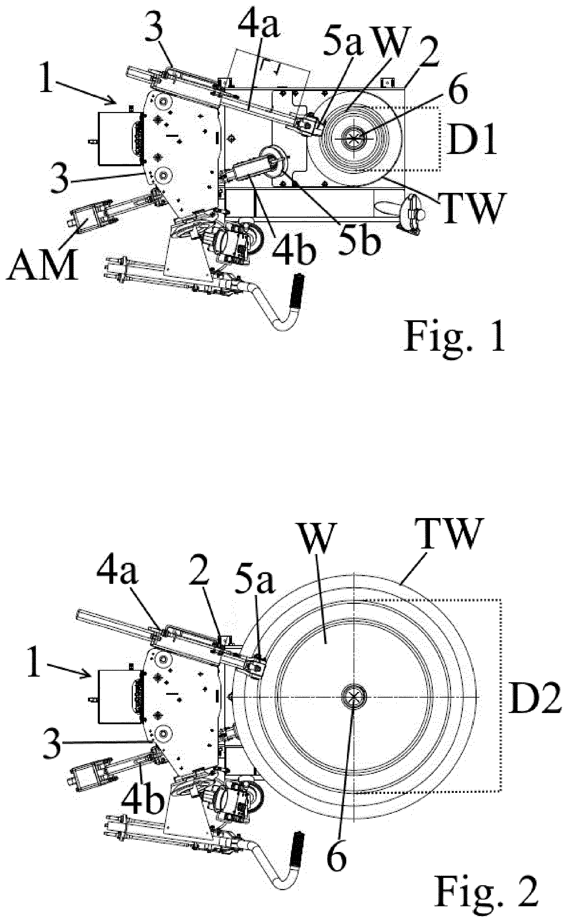

With reference in particular to the embodiment in figures 1 and 2, at least one tool-holder arm 4a, 4b is telescopic and the detection means comprise an encoder or a potentiometer designed to detect the position or movement of the tool-holder arm 4a, 4b or of an end or a portion to which a tool 5a, 5b is supported or articulated, or of the tool 5a, 5b itself.

In this regard, once the position of the tool-holder arm 4a, 4b or better, the displacement or extension thereof is established to bring the tool 5a, 5b above or to the level or height of the outer edge of the rim W, it is possible to calculate the radius or the diameter of the rim W, this operation being made by the control unit 7 or by the detection means 8 themselves.

Thus, for example, with a small wheel rim W with a first diameter D1, the tool-holder arm 4a, 4b will be in extended or partially extended position, whereas with a large or larger rim W and with a second diameter D2, the tool-holder arm 4a, 4b will be in retracted position or in any case not extended.

Once the tool 5a, 5b has been brought immediately over or against or at the outer edge of the rim W, the detection means 8 will detect the respective position or better the position/elongation change sending it to the control unit 7, which will receive or calculate the radius and/or diameter D1 or D2 of the rim W.

With reference to this aspect, prior to this operation, for example when the arm 4a, 4b is in an entirely retracted or fully extended position, a distance of the tool or in any case of the detection means 8 carried by the arm 4a, 4b can be set, for example by means of input means 8a, from the center of the rim W mounted on the supporting and constraining means 6, whereby once the arm 4a, 4b is moved so as to bring it immediately over or at or near the outer edge of the rim W, the detection means 8 detect this displacement or change or the new position and then communicate it to the unit 7, which can then evaluate or receive directly from the detection means 8, the radius and/or the diameter obtained by comparing the data received or evaluated with the arm 4a, 4b in the fully retracted or fully extended position and in that currently reached.

Alternatively, the detection means 8 could be brought first to the center of the rim W and then at the outer edge of the rim W, thus evaluating the displacement or radius and/or diameter of the latter, and then communicating it to the electronic control unit 7. It could also be possible to operate by bringing the detection means 8 first at a first outer edge portion of the rim W and then at a second outer edge portion of the rim W diametrically opposite to the first, to thus evaluate the rim W diameter to be communicated to the electronic control unit 7 or the data or movements to be communicated to the electronic control unit 7, so that this evaluates the diameter.

The detection means 8 send respective data (displacement or radius/diameter) to the control unit 7 on the basis of instructions or commands of an operator and/or on the basis of a special signal or input of a sensor or feeler or detector, for example of the rim edge.

Of course, the arms 4a, 4b could also be pivoted to the column and not necessarily telescopic and the displacements thereof would therefore be angular and not or not only extension-retraction.

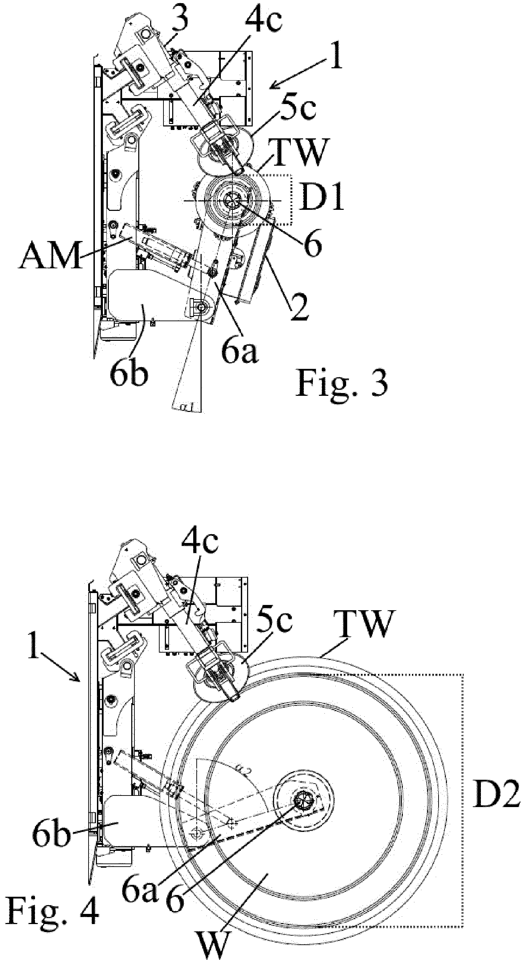

As regards the embodiment in figures 3 and 4, it relates to a machine according to the present invention, which is very similar to the machine illustrated above, but in which the supporting and constraining means 6 comprise at least one main support arm 6a of a group of jaws or of a mandrel or of a wheel-bearing table, such an arm 6a is pivoted to a respective column 3, if desired with the interposition of a secondary arm 6b which on one side is pivoted or fixed to column 3 and on the other is pivoted or fixed to the arm 6a. In this case, the detection means 8 preferably comprise an encoder or a potentiometer designed to detect the position, in particular the angular position of the main arm 6a.

According to this embodiment, the tool-holder arm 4c may also be fixed and slidable for example only along a vertical axis with respect to a respective column 3 or movable, for example telescopic or pivoted, with respect to it, but in any case the supporting and constraining means 6 are movable, so that the adaptation as a function of the diameter of the rim W to be processed is achieved thanks to the displacement of the supporting and constraining means 6.

In this case, with arm 6a in rest position or in a first position, it is possible to set, for example by means of input means 8a a distance or at least an angle of inclination of the arm 6a with respect to a reference, such as a horizontal or vertical axis and once the arm 6a is moved so as to bring the rim W onto the supporting and constraining means 6 immediately below or close to or in front of the tool 5c, the detection means 8 detect this displacement or change or evaluate the radius or diameter of the rim W and then communicate this displacement or change or radius or diameter to the unit 7, which can then evaluate or obtain the radius and/or the diameter.

Thus, for example, with a small rim W, with a first diameter D1, the main support arm 6a will be in a first position at a first angle α1 with respect to a reference, while a large rim W, with a second diameter D2, the main support arm 6a will be in a second or respective position at a second or respective angle α2 with respect to a reference, such as a horizontal or vertical axis.

Once the supporting and constraining means 6 or better, the respective main support arm 6a has been moved so as to bring the outer edge of the rim W immediately below or close to or at or in front of the tool 4c, the detection means 8 will detect the respective position or better the variation of position/elongation sending it or otherwise informing the control unit 7, which will receive or calculate the radius and/or diameter D1 or D2 of the rim W.

With reference to this aspect, before this operation, with arm 6a in an entirely retracted position or entirely extended or in any case at an angle corresponding to a maximum or minimum rim diameter, it is possible to set, for example by means of input means 8a, the correlation between this angle and the minimum or maximum diameter, whereby once a rim W is mounted on the supporting and constraining means 6, moving the arm 6a so as to bring the outer edge of the rim W immediately below or close to or at or in front of tool 4c, the detection means 8 detect this displacement or change and then communicate it to the unit 7, which can then evaluate the radius and/or diameter or receive it directly from the detection means 8.

Advantageously but not limitedly, the machine 1 or the control unit 7 can then be provided with a suitable memory portion in which a database containing data relating to the appropriate rotation speeds of the supporting or constraining means 6 is stored or can be stored as a function of or related to the radius or diameter of the wheel rim to be processed, if desired also depending on the treatment to be carried out, such as assembly or disassembly.

The data contained in the database may of course be divided according to the type or types of tired wheel TW to be treated, since each wheel or better the components thereof have their specific hardness or resistance.

Clearly, the machine 1 may also comprise a display 16 connected, in particular electrically, to the electronic control unit 7, such a display 16 is designed to provide the operators with a visual interface of the unit 7, through which the operators can display and optionally set or dialogue with this unit. A computer or processor may also be provided in the machine, in which the electronic control unit 7 is integrated and if desired connected to the display 16.

The radius and/or the diameter may of course be evaluated also differently, for example, as indicated above, with a laser or a camera or be entered or communicated directly by an operator to the control unit 7.

By way of example, for a car wheel processing machine, the optimum tangential force to be applied to a tire bead, in particular during the assembly and/or disassembly of a tired wheel, could be about 3500 N and the peripheral speed of about 0.25 m/sec, whereby the torque and the rotation speed (estimated in revolutions per minute or rpm) of the supporting and constraining means 6 or platform, depending on the diameter (indicated in inches) of the rim W, could be according to the following table:

| Diameter | Torque | Rotation speed of the platform |
|---|---|---|
| 10" | 444 N/m | 19 rpm |
| 20" | 888 N/m | 9.5 rpm |
| 30" | 1333 N/m | 6.3 rpm |

In light of the foregoing, advantageously, the electronic control unit 7 for processing car wheels
- for a diameter of a rim of about 10" (10 inches = 25.4 cm) it is designed to control the motor means M so that they set a rotation speed of the supporting and constraining means 6 equal to about 17-21 revolutions per minute, for example 18-20 rpm, possibly 19 revolutions per minute, and/or
- for a diameter of a wheel rim of about 20" (20 inches = 50.8 cm) it is designed to control the motor means M so that they set a rotation speed of the supporting and constraining means 6 equal to about 8-12 revolutions per minute, for example 9-11 revolutions per minute, possibly 9.5 revolutions per minute, and/or
- for a diameter of a rim of about 30" (30 inches = 76.2 cm) it is designed to control the motor means M so that they set a rotation speed of the supporting and constraining means 6 equal to about 4-7 revolutions per minute, for example 5-7 revolutions per minute, possibly 6.3 revolutions per minute.

Again by way of example, for a truck or agricultural vehicle wheel processing machine, the tangential force to be applied to a tire bead, in particular during the assembly and/or disassembly of a tired wheel, could be about 9500 N and the peripheral speed of about 0.2 m/sec, whereby the torque and the rotation speed (estimated in revolutions per minute or rpm) of the supporting and constraining means 6 or platform, depending on the diameter of the rim could be according to the following table:

| Diameter | Torque | Rotation speed of the platform |
|---|---|---|
| 10" | 1207 N/m | 15 rpm |
| 20" | 2415 N/m | 7.5 rpm |
| 30" | 3621 N/m | 5 rpm |
| 40" | 4826 N/m | 3.75 rpm |
| 50" | 6035 N/m | 3 rpm |

Preferably, the electronic control unit 7 for the treatment of truck or car or agricultural transport vehicle wheels
- for a diameter of a rim of about 10" (10 inches = 25.4 cm), it is designed to control the motor means M so as to set a rotation speed of the supporting and constraining means 6 equal to about 12-18 revolutions per minute, for example 14-16 rpm, possibly 15 revolutions per minute, and/or
- for a diameter of a wheel rim of about 20" (20 inches = 50.8 cm), it is designed to control the motor means M so as to set a rotation speed of the supporting and constraining means 6 equal to about 6.5-8 revolutions per minute, for example 7-8 revolutions per minute, possibly 7.5 revolutions per minute, and/or
- for a diameter of a rim of about 30" (30 inches = 76.2 cm), it is designed to control the motor means M so as to set a rotation speed of the supporting and constraining means 6 equal to about 4-6 revolutions per minute, possibly 5 revolutions per minute, and/or
- for a diameter of a rim of about 40" (40 inches = 101.6 cm), it is designed to control the motor means M so as to set a rotation speed of the supporting and constraining means 6 equal to about 3.75 revolutions per minute, and/or
- for a diameter of a wheel rim of about 50" (50 inches = 127 cm), it is designed to control the motor means M so as to set a rotation speed of the supporting and constraining means 6 equal to about 3 revolutions per minute.

The above values are some values verified experimentally and that applied to a machine, prevent the damage of a tire and a wheel rim to be treated (for example to assemble-disassemble) and also make the treatment, such as disassembly or assembly, of a wheel easier.

Clearly, these values are merely indicative and not limiting of the scope of protection defined by the claims.

A method for the treatment, such as the assembly and/or disassembly of a tired wheel with a machine according to the present invention comprises the following steps, preferably in sequence:
- blocking a wheel rim W or a tired wheel TW on the supporting and constraining means 6 or on a table, jaws or spindle thereof,
- detecting or entering the value of the radius or diameter of a rim W to be treated or data or information related or correlatable by the electronic control unit 7 to the radius or diameter of a wheel rim (W), that is to say, data or information from which the unit 7 can derive or obtain the value of the radius or diameter,
the electronic control unit controlling the motor means M so as to change or set, in fact automatically or without the intervention of an operator, the speed of rotation or displacement of the supporting and constraining means 6 and/or of the work tool 5a, 5b depending on the radius or diameter of the rim W communicated or calculated thereby, for example as indicated above.

Advantageously, the electronic card or the electronic control unit 7 controls the motor means M so that for each radius or diameter or range of radii or diameters of the rims, the unit 7 sets a respective rotation speed of the means 6 or one or more tools 5a, 5b, 5c lower than that set or settable for radii or diameters or ranges of radii or diameters (of rims) lower and higher than the one set or settable for larger radii or diameters or ranges of radii or diameters (of rims).

For the advantageous and non-limiting aspects of a method according to the present invention, the foregoing with reference to the machine is valid.

The detection step can be carried out by means of an encoder, a potentiometer, a caliper, a camera, a laser or by chip reading means in a tire of the wheel to be processed.

The input step may be carried out, for example, by means of a keyboard or a voice command or other input means.

In a method according to the present invention, the speed set for a tired wheel of a motor vehicle or for a truck wheel or agricultural transport vehicle wheel is preferably as indicated above.

Advantageously, the control unit is able to vary the speed of rotation of the supporting and constraining means 6 among three, four, five, six or more, even up to 10, 20, 30, 40 or more values, this being possible for example by means of an inverter as indicated above which is designed to vary the supply frequency of the motor means M, so as to increase or decrease the speed of rotation of the supporting and constraining means 6 and the maximum torque applied thereto and/o the rotation speed of the work tool or tools 5a, 5b.

Preferably, in a machine according to the present invention there are no sensors of the resistive or reaction strains or loads or forces on the work tool and/or of the resistive or reaction strains or loads or torques on the supporting and constraining means, which are able to detect the resistant stress or load or force to which the tool is subjected from time to time by the wheel or its components during processing, for example assembly and/or disassembly, and/or the resistant stress or load or torque to which the supporting and constraining means are subjected by the wheel or its components, during assembly, for example assembly and/or disassembly. Such sensors would make the machine complex and not as simple as that according to the present invention.

As will be understood, by means of a machine and a method according to the present invention, an identification is obtained or the input is made of the rim diameter of or for a wheel to be treated and an automatic adjustment or without the intervention of an operator of the rotation speed and of the maximum force applied to the supporting and constraining means, such as a rotating platform or the tools 5a, 5b.

Moreover, this implies the possibility of using tools that are less resistant than traditional machines, since they do not have to be subjected to high loads, but from time to time depending on the diameter or radius of the rim and therefore the radius or diameter of the wheel, the speed of rotation and therefore the peripheral speed of the wheel and the working conditions of the tool and of the stress applied thereto are varied, so as to always work in optimal conditions.

Changes and variants of the invention are possible within the scope of protection as defined by the claims.

## Claims

1. Machine for treating a tired wheel comprising
- at least one base (2),
- at least one column (3) projecting upward from said at least one base (2),
- at least one tool-holder arm (4a, 4b, 4c) supported by said at least one column (3),
- at least one work tool (5a, 5b, 5c) supported by or articulated to said at least one tool-holder arm (4a, 4b, 4c),
- supporting and constraining means (6) supported by said at least one base (2) for the support and constraining of a rim (W) of or for a tired wheel (TW), said supporting and constraining means (6) being set to support a rim (W) or a tired wheel (TW) with rotation and symmetry axis that is vertical, horizontal or tilted with respect to the vertical,
- at least one electronic control unit (7),
- means (8) for detecting the radius or the diameter of a rim (W) or of data or information correlated or correlatable by said at least one electronic control unit (7) with the radius or with the diameter of a rim (W) on the supporting and constraining means (6) and/or means for introducing or communicating (8a) the radius or the diameter of a rim (W) on the supporting and constraining means (6) in the at least/to the at least one electronic control unit (7),
- motor means (M) for actuating or driving in rotation the supporting and constraining means (6) and/or motor means set to drag into rotation the tools (5a, 5b) around said supporting and constraining means (6), such that said supporting and constraining means can revolve or rotate around a rotation axis and/or said at least one work tool (5a, 5b, 5c) can revolve or rotate around said supporting and constraining means (6),
said at least one electronic control unit (7) being set to control said motor means (M) so as to vary or set the speed of rotation or displacement of said supporting and constraining means (6) and/or of said at least one work tool (5a, 5b) around said supporting and constraining means (6) as a function of the radius or diameter of said rim (W) communicated thereto or calculated thereby.

2. Machine according to claim 1, wherein said at least one electronic control unit (7) is set to control said motor means (M) so as to vary or set the speed of rotation or displacement of said supporting and constraining means (6) and/or of said at least one work tool (5a, 5b) around said supporting and constraining means (6) as a function of the radius or of the diameter of said rim (W) communicated thereto or calculated thereby, in a manner such that said motor means (M) set, for each radius or diameter or range of radii or diameters of rims, a respective rotation speed for said supporting and constraining means (6) and/or for said at least one work tool (5a, 5b) around said supporting and constraining means (6) smaller than that set or settable for radii or diameters or ranges of radii or diameters of smaller rims and greater than that set or settable for radii or diameters or ranges of radii or diameters of larger rims.

3. Machine according to claim 1 or 2, wherein said electronic control unit (7) is set to control said motor means (M) such that, irrespectively from the radius or diameter of the rims (W) treated in the machine, they substantially maintain constant or in any case with less than 5% or 10% variability the relative peripheral speed between supporting and constraining means (6) and work tools (5a, 5b, 5c) at the external edge to be treated of the wheels.

4. Machine according to any one of the preceding claims, wherein said means (8) for detecting the radius or the diameter of a rim (W) comprise an encoder, a potentiometer, a caliper, a camera, a laser and/or means for reading a chip in a tire of a wheel to be treated.

5. Machine according to claim 4, wherein said at least one tool-holder arm (4a, 4b, 4c) is pivoted to said at least one column (3) and/or is telescopic and wherein said detection means (8) comprise an encoder or a potentiometer set to detect the position or the movement of said at least one tool-holder arm (4a, 4b, 4c) or of the end or of a portion of said tool-holder arm to which said at least one tool (5a, 5b, 5c) is supported or articulated or the position or the movement of the tool (5a, 5b, 5c) itself.

6. Machine according to any one of the preceding claims, wherein said means for introducing or communicating the radius or the diameter of a rim comprise a keyboard, a mouse, a tablet, a smartphone and/or a touch screen display.

7. Machine according to any one of the preceding claims, wherein said electronic control unit (8) for treating wheels of cars
- for a diameter of a rim of about 25.4 cm, is set to control the motor means (M) so as to set a rotation speed for the supporting and constraining means (6) equal to about 17-21 revolutions per minute,
- for a diameter of a rim of about 50.8 cm, is set to control the motor means (M) so as to set a rotation speed for the supporting and constraining means (6) equal to about 8-12 revolutions per minute,
- for a diameter of a rim of about 76.2 cm, is set to control the motor means (M) so as to set a rotation speed for the supporting and constraining means (6) equal to about 4-7 revolutions per minute.

8. Machine according to any one of the preceding claims, wherein said electronic control unit (8) for treating wheels of a truck or agricultural transport vehicles
- for a diameter of a rim of about 25.4 cm, is set to control the motor means (M) so as to set a rotation speed for the supporting and constraining means (6) equal to about 12-18 revolutions per minute,
- for a diameter of a rim of about 50.8 cm, is set to control the motor means (M) so as to set a rotation speed for the supporting and constraining means (6) equal to about 6.5-8 revolutions per minute,
- for a diameter of a rim of about 76.2 cm, is set to control the motor means (M) so as to set a rotation speed for the supporting and constraining means (6) equal to about 4-6 revolutions per minute,
- for a diameter of a rim of about 101.6 cm, is set to control the motor means (M) so as to set a rotation speed for the supporting and constraining means (6) equal to about 3.75 revolutions per minute,
- for a diameter of a rim of about 127 cm, is set to control the motor means (M) so as to set a rotation speed for the supporting and constraining means (6) equal to about 3 revolutions per minute.

9. Machine according to any one of the preceding claims, comprising at least one inverter (9) set to vary the power supply frequency of the motor means (M), so as to increase or decrease the rotation speed of said supporting and constraining means (6) and/or the rotation speed of said at least one tool (5a, 5b, 5c) around said supporting and constraining means (6), said at least one inverter (9) being driven by said at least one electronic control unit (7) as a function of the values detected by the detection means (8) and/or obtained from said introduction or communication means (8a).

10. Machine according to claim 9, wherein said at least one inverter (9) is capable of varying the power supply frequency of said motor means (M) so as to obtain three, four, five, six or more rotation speed values for said supporting and constraining means (6) and/or for said at least one tool (5a, 5b, 5c) around said supporting and constraining means (6).

11. Method for the treatment, such as mounting and/or dismounting, of a tired wheel with a machine according to any one of the preceding claims, comprising the following steps:
- locking a rim (W) or a tired wheel (TW) on the supporting and constraining means (6),
- detecting or introducing the value of the radius or of the diameter of a rim (W) or data or information correlated or correlatable by the electronic control unit (7) with the radius or with the diameter of a rim (W),
- wherein said at least one electronic control unit (7) controls said motor means (M) so as to vary or set the rotation or displacement speed of said supporting and constraining means (6) and/or of said at least one work tool (5a, 5b, 5c) as a function of the radius or of the diameter of said rim (W) communicated thereto or calculated thereby.

12. Method according to claim 11, wherein said at least one electronic control unit (7) controls the motor means (M) such that for each radius or diameter or range of radii or diameters the motor means (M) set a respective rotation speed for said supporting and constraining means (6) and/or for said at least one work tool (5a, 5b) around said supporting and constraining means (6) smaller than that set or settable for radii or diameters or ranges of radii or diameters of smaller rims and greater than that set or settable for radii or diameters or ranges of radii or diameters of larger rims.

13. Method according to claim 11 or 12, wherein said detection step is conducted by means of an encoder, a potentiometer, a caliper, a camera, a laser and/or means for reading a chip in a tire of a wheel to be treated.

14. Method according to claim 11, 12 or 13 for the treatment, such as mounting and/or dismounting, of a tired wheel of a car, wherein
- for a diameter of a rim of about 25.4 cm, said control unit (8) controls said motor means (M) such that they set a rotation speed for the supporting and constraining means (6) equal to about 17-21 revolutions per minute,
- for a diameter of a rim of about 50.8 cm, said control unit (8) controls said motor means (M) such that they set a rotation speed for the supporting and constraining means (6) equal to about 8-12 revolutions per minute,
- for a diameter of a rim of about 76.2 cm, said control unit (8) controls said motor means (M) such that they set a rotation speed for the supporting and constraining means (6) equal to about 4-7 revolutions per minute.

15. Method according to claim 11, 12 or 13 for the treatment, such as mounting and/or dismounting, of a tired wheel of a truck or agricultural transport vehicles, wherein
- for a diameter of a rim of about 25.4 cm, said control unit controls said motor means (M) such that they set a rotation speed for the supporting and constraining means (6) equal to about 12-18 revolutions per minute,
- for a diameter of a rim of about 50.8 cm, said control unit (8) controls said motor means (M) such that they set a rotation speed for the supporting and constraining means (6) equal to about 6.5-8 revolutions per minute,
- for a diameter of a rim of about 76.2 cm, said control unit controls said motor means (M) such that they set a rotation speed for the supporting and constraining means (6) equal to about 4-6 revolutions per minute,
- for a diameter of a rim of about 101.6 cm, said control unit controls said motor means (M) such that they set a rotation speed for the supporting and constraining means (6) equal to about 3.75 revolutions per minute,
- for a diameter of a rim of about 127 cm, said control unit controls said motor means (M) such that they set a rotation speed for the supporting and constraining means (6) equal to about 3 revolutions per minute.

## Patentansprüche

1. Maschine zum Behandeln eines bereiften Rads, welche aufweist:
- zumindest eine Basis (2),
- zumindest eine Säule (3), die von der zumindest einen Basis (2) aufwärts vorsteht,
- zumindest einen Werkzeughaltearm (4a, 4b, 4c), der an der zumindest einen Säule (3) gelagert ist,
- zumindest ein Arbeitswerkzeug (5a, 5b, 5c), das an dem zumindest einen Werkzeughaltearm (4a, 4b, 4c) gelagert oder angelenkt ist,
- Trag- und Eingrenzmittel (6), die an der zumindest einen Basis (2) gelagert sind, um eine Felge (W) eines oder für ein bereiftes Rad (TW) zu tragen und einzugrenzen, wobei die Trag- und Eingrenzmittel (6) eingestellt sind, um eine Felge (W) oder ein bereiftes Rad (TW) mit einer in Bezug auf die Vertikale vertikalen, horizontalen oder geneigten Dreh- und Symmetrieachse zu tragen,
- zumindest eine elektronische Steuereinheit (7),
- Mittel (8) zum Detektieren des Radius oder des Durchmessers einer Felge (W) oder von Daten oder Informationen, die zu dem Radius oder dem Durchmesser einer Felge (W) auf dem Trag- und Eingrenzmittel (6) korreliert sind oder durch die zumindest eine elektronische Steuereinheit (7) korrelierbar sind, und/oder Mittel zum Einbringen oder Kommunizieren (8a) des Radius oder des Durchmessers einer Felge (W) auf den Trag- und Eingrenzmitteln (6) in die oder zu der zumindest einen elektronischen Steuereinheit (7),
- Motormittel (M) zum drehenden Aktivieren oder Antreiben der Trag- und Eingrenzmittel (6) und/oder Motormittel, um die Werkzeuge (5a, 5b) um die Trag- und Eingrenzmittel (6) in Drehung versetzen, so dass die Trag- und Eingrenzmittel eine Drehachse umlaufen oder sich um diese herumdrehen können, und/oder dass das zumindest eine Arbeitswerkzeug (5a, 5b, 5c) die Trag- und Eingrenzmittel (6) umlaufen oder sich um diese herumdrehen kann,
wobei die zumindest eine elektronische Steuereinheit (7) eingestellt ist, um die Motormittel (M) zu steuern, um die Dreh- oder Verlagerungsgeschwindigkeit der Trag- und Eingrenzmittel (6) und/oder des zumindest einen Arbeitswerkzeugs (5a, 5b) um die Trag- und Eingrenzmittel (6) als zu ihr kommunizierte oder von ihr berechnete Funktion des Radius oder des Durchmessers der Felge (W) zu verändern oder zu setzen.

2. Maschine nach Anspruch 1, wobei die zumindest eine elektronische Steuereinheit (7) eingestellt ist, um die Motormittel (M) zu steuern, um die Dreh- oder Verlagerungsgeschwindigkeit der Trag- und Eingrenzmittel (6) und/oder des zumindest einen Arbeitswerkzeugs (5a, 5b) um die Trag- und Eingrenzmittel (6) herum als zu ihr kommunizierte oder von ihr berechnete Funktion des Radius des Durchmessers der Felge (W) zu verändern oder zu setzen, derart, dass die Motormittel (M) für jeden Radius oder Durchmesser oder Bereich von Radien oder Durchmessern von Felgen eine jeweilige Drehzahl für die Trag- und Eingrenzmittel (6) und/oder für das zumindest eine Arbeitswerkzeug (5a, 5b) um die Trag- und Eingrenzmittel (6) kleiner zu setzen als jene, die für Radien oder Durchmesser oder Bereiche von Radien oder Durchmessern kleinerer Felgen gesetzt oder setzbar ist, und größer als jene, die mit Radien oder Durchmesser oder Bereiche für Radien oder Durchmessern größerer Felgen gesetzt oder setzbar ist.

3. Maschine nach Anspruch 1 oder 2, wobei die elektronische Steuereinheit eingestellt ist, um die Motormittel (M) derart zu steuern, dass unabhängig vom Radius oder Durchmesser der in der Maschine behandelten Felgen (W) sie im Wesentlichen konstant bleiben oder in jedem Fall weniger als 5% oder 10% Variabilität der relativen Umfangsgeschwindigkeit zwischen den Trag- und Eingrenzmitteln (6) und Arbeitswerkzeugen (5a, 5b, 5c) an dem zu behandelnden Außenrand der Räder.

4. Maschine nach einem der vorhergehenden Ansprüche, wobei die Mittel (8) zum Detektieren des Radius oder des Durchmessers einer Felge (W) einen Codierer, ein Potentiometer, einen Sattel, eine Kamera, einen Laser und/oder Mittel zum Lesen eines Chips in einem Reifen eines zu behandelnden Rads aufweisen.

5. Maschine nach Anspruch 4, wobei der zumindest eine Werkzeughaltearm (4a, 4b, 4c) an die zumindest eine Säule (3) angelenkt ist und/oder teleskopisch ist, und wobei die Detektionsmittel (8) einen Codierer oder ein Potentiometer aufweisen, das eingestellt ist, um die Position oder die Bewegung des zumindest einen Werkzeughaltearms (4a, 4b, 4c) oder des Endes oder eines Abschnitts des Werkzeughaltearms, an dem das zumindest eine Werkzeug (5a, 5b, 5c) getragen oder angelenkt ist, oder die Position oder die Bewegung des Werkzeugs (5a, 5b, 5c) selbst zu detektieren.

6. Maschine nach einem der vorhergehenden Ansprüche, wobei die Mittel zum Einbringen oder Kommunizieren des Radius oder des Durchmessers einer Felge eine Tastatur, eine Maus, ein Tablet, ein Smartphone und/oder ein Touchscreen-Display aufweisen.

7. Maschine nach einem der vorhergehenden Ansprüche, wobei die elektronische Steuereinheit (8) zum Behandeln von Rädern eines Autos:
- für einen Durchmesser einer Felge von etwa 25,4 cm eingestellt ist, um die Motormittel (M) zu steuern, um eine Drehzahl für die Trag- und Eingrenzmittel (6) auf gleich oder etwa 17 bis 21 Umdrehungen pro Minute zu setzen,
- für einen Durchmesser einer Felge von etwa 50,8 cm eingestellt ist, um die Motormittel (M) zu steuern, um eine Drehzahl für die Trag- und Eingrenzmittel (6) auf gleich oder etwa 8 bis 12 Umdrehungen pro Minute zu setzen,
- für einen Durchmesser einer Felge von etwa 76,2 cm eingestellt ist, um die Motormittel (M) zu steuern, um eine Drehzahl für die Trag- und Eingrenzmittel (6) auf gleich oder etwa 4 bis 7 Umdrehungen pro Minute zu setzen.

8. Maschine nach einem der vorhergehenden Ansprüche, wobei die elektronische Steuereinheit (8) zum Behandeln von Rädern eines Lastwagens oder von landwirtschaftlichen Transportfahrzeugen:
- für einen Durchmesser einer Felge von etwa 25,4 cm eingestellt ist, um die Motormittel (M) zu steuern, um eine Drehzahl für die Trag- und Eingrenzmittel (6) auf gleich oder etwa 12 bis 18 Umdrehungen pro Minute zu setzen,
- für einen Durchmesser einer Felge von etwa 50,8 cm eingestellt ist, um die Motormittel (M) zu steuern, um eine Drehzahl für die Trag- und Eingrenzmittel (6) auf gleich oder etwa 6,5 bis 8 Umdrehungen pro Minute zu setzen,
- für einen Durchmesser einer Felge von etwa 76,2 cm eingestellt ist, um die Motormittel (M) zu steuern, um eine Drehzahl für die Trag- und Eingrenzmittel (6) auf gleich oder etwa 4 bis 6 Umdrehungen pro Minute zu setzen,
- für einen Durchmesser einer Felge von etwa 101,6 cm eingestellt ist, um die Motormittel (M) zu steuern, um eine Drehzahl für die Trag- und Eingrenzmittel (6) auf gleich oder etwa 3,75 Umdrehungen pro Minute zu setzen,
- für einen Durchmesser einer Felge von etwa 127 cm eingestellt ist, um die Motormittel (M) zu steuern, um eine Drehzahl für die Trag- und Eingrenzmittel (6) auf gleich oder etwa 3 Umdrehungen pro Minute zu setzen.

9. Maschine nach einem der vorhergehenden Ansprüche, die zumindest einen Inverter (9) aufweist, um die Stromversorgungsfrequenz der Motormittel (M) zu verändern, um die Drehzahl der Trag- und Eingrenzmittel (6) und/oder die Drehzahl des zumindest einen Werkzeugs (5a, 5b, 5c) um die Trag- und Eingrenzmittel (6) herum zu erhöhen oder zu verringern, wobei der zumindest eine Inverter (9) von der zumindest einen elektronischen Steuereinheit (7) als Funktion der von den Detektionsmitteln (8) detektierten und/oder von den Einbring- oder Kommunikationsmitteln (8) erhaltenen Werte angetrieben wird.

10. Maschine nach Anspruch 9, wobei der zumindest eine Inverter (9) in der Lage ist, die Stromversorgungsfrequenz der Motormittel (M) zu verändern, um 3, 4, 5, 6 oder mehr Drehzahlwerte für die Trag- und Eingrenzmittel (6) und/oder für das zumindest eine Werkzeug (5a, 5b, 5c) um die Trag- und Eingrenzmittel (6) herum zu verändern.

11. Verfahren zur Behandlung, wie etwa Montieren und/oder Demontieren, eines bereiften Rads mit einer Maschine nach einem der vorhergehenden Ansprüche, welches die folgenden Schritte aufweist:
- Arretieren einer Felge (W) oder eines bereiften Rads (TW) auf den Trag- und Eingrenzmitteln (6),
- Detektieren oder Einbringen des Werts des Radius oder des Durchmessers einer Felge (W) oder von Daten oder Informationen, die mit dem Radius oder mit dem Durchmesser einer Felge (W) korreliert oder mit der elektronischen Steuereinheit (7) korrelierbar sind,
- wobei die zumindest eine elektronische Steuereinheit (7) die Motormittel (M) steuert, um die Dreh- oder Verlagerungsgeschwindigkeit der Trag- und Eingrenzmittel (6) und/oder des zumindest einen Arbeitswerkzeugs (5a, 5b, 5c) als Funktion des zu ihr kommunizierten oder von ihr berechneten Radius oder des Durchmessers der Felge (W) zu verändern oder zu setzen.

12. Verfahren nach Anspruch 11, wobei die zumindest eine elektronische Steuereinheit (7) die Motormittel (M) derart steuert, dass die Motormittel (M) für jeden Radius oder Durchmesser oder Bereich von Radien oder Durchmessern die Motormittel (M) eine jeweilige Drehzahl für die Trag- und Eingrenzmittel (6) und/oder für das zumindest eine Arbeitswerkzeug (5a, 5b) um die Trag- und Eingrenzmittel (6) kleiner zu setzen als jene, die für Radien oder Durchmesser oder Bereiche von Radien oder Durchmessern kleinerer Felgen gesetzt oder setzbar ist, und größer als jene, die für Radien oder Durchmesser oder Bereiche von Radien oder Durchmessern größerer Felgen gesetzt oder setzbar ist.

13. Verfahren nach Anspruch 11 oder 12, wobei der Detektionsschritt mittels eines Codierers, eines Potentiometers, eines Sattels, einer Kamera, eines Lasers und/oder Mitteln zum Lesen eines Chips in einem Reifen eines zu behandelnden Rads durchgeführt wird.

14. Verfahren nach Anspruch 11, 12 oder 13 für die Behandlung, wie etwa Montieren und/oder Demontieren eines bereiften Rads eines Autos, wobei
- für einen Durchmesser einer Felge von etwa 25,4 cm die Steuereinheit (8) die Motormittel (M) derart steuert, dass sie eine Drehzahl für die Trag- und Eingrenzmittel (6) auf gleich oder etwa 17 bis 21 Umdrehungen pro Minute setzen,
- für einen Durchmesser einer Felge von etwa 50,8 cm die Steuereinheit (8) die Motormittel (M) derart steuert, dass sie eine Drehzahl für die Trag- und Eingrenzmittel (6) auf gleich oder etwa 8 bis 12 Umdrehungen pro Minute setzen,
- für einen Durchmesser einer Felge von etwa 76,2 cm die Steuereinheit (8) die Motormittel (M) derart steuert, dass sie eine Drehzahl für die Trag- und Eingrenzmittel (6) auf gleich oder etwa 4 bis 7 Umdrehungen pro Minute setzen.

15. Verfahren nach Anspruch 11, 12 oder 13 für die Behandlung, wie etwa Montieren und/oder Demontieren eines bereiften Rads eines Lastwagens oder von landwirtschaftlichen Transportfahrzeugen, wobei:
- für einen Durchmesser einer Felge von etwa 25,4 cm die Steuereinheit die Motormittel (M) derart steuert, dass sie eine Drehzahl für die Trag- und Eingrenzmittel (6) auf gleich oder etwa 12 bis 18 Umdrehungen pro Minute setzen,
- für einen Durchmesser einer Felge von etwa 50,8 cm die Steuereinheit (8) die Motormittel (M) derart steuert, dass sie eine Drehzahl für die Trag- und Eingrenzmittel (6) auf gleich oder etwa 6,5 bis 8 Umdrehungen pro Minute setzen,
- für einen Durchmesser einer Felge von etwa 76,2 cm die Steuereinheit die Motormittel (M) derart steuert, dass sie eine Drehzahl für die Trag- und Eingrenzmittel (6) auf gleich oder etwa 4 bis 6 Umdrehungen pro Minute setzen,
- für einen Durchmesser einer Felge von etwa 101,6 die Steuereinheit die Motormittel (M) derart steuert, dass sie eine Drehzahl für die Trag- und Eingrenzmittel (6) auf gleich oder etwa 3,75 Umdrehungen pro Minute setzen.
- für einen Durchmesser einer Felge von etwa 127 cm die Steuereinheit die Motormittel (M) derart steuert, dass sie eine Drehzahl für die Trag- und Eingrenzmittel (6) auf gleich oder etwa 3 Umdrehungen pro Minute setzen.

## Revendications

1. Machine de traitement d'une roue à pneumatique comprenant
- au moins une base (2),
- au moins une colonne (3) se projetant vers le haut depuis ladite au moins une base (2),
- au moins un bras de retenue d'outil (4a, 4b, 4c) supporté par ladite au moins une colonne (3),
- au moins un outil de travail (5a, 5b, 5c) supporté par ledit, ou articulé par rapport audit, au moins un bras de retenue d'outil (4a, 4b, 4c),
- moyens de support et de maintien (6) supporté par ladite au moins une base (2) pour le support et le maintien d'une jante (W) de ou pour une roue à pneumatique (TW), ledit moyen de support et de maintien (6) étant défini pour supporter une jante (W) ou une roue à pneumatique (TW) avec l'axe de rotation et de symétrie qui est vertical, horizontal ou incliné par rapport à la verticale,
- au moins une unité de commande électronique (7),
- un moyen (8) de détection du rayon ou du diamètre d'une jante (W) ou de données ou d'informations corrélées ou pouvant être corrélées par ladite au moins une unité de commande électronique (7) au rayon ou au diamètre d'une jante (W) sur le moyen de support et de maintien (6) et/ou un moyen d'introduction ou de communication (8a) du rayon ou du diamètre d'une jante (W) sur le moyen de support et de maintien (6) dans la au moins/à la au moins une unité de commande électronique (7),
- moyen moteur (M) pour actionner ou entraîner en rotation le moyen de support et de maintien (6) et/ou moyen moteur défini pour tirer en rotation les outils (5a, 5b) autour dudit moyen de support et de maintien (6), de sorte que ledit moyen de support et de maintien peut pivoter ou tourner autour d'un axe de rotation et/ou ledit au moins un outil de travail (5a, 5b, 5c) peut pivoter ou tourner autour dudit moyen de support et de maintien (6),
ladite au moins une unité de commande électronique (7) étant définie pour commander ledit moyen moteur (M) afin qu'il varie ou pour définir la vitesse de rotation ou de déplacement dudit moyen de support et de maintien (6) et/ou dudit au moins un outil de travail (5a, 5b) autour dudit moyen de support et de maintien (6) comme une fonction du rayon ou du diamètre de ladite jante (W) communiquée à celle-ci ou calculée ainsi.

2. Machine selon la revendication 1, ladite au moins une unité de commande électronique (7) étant définie pour commander ledit moyen moteur (M) afin qu'il varie ou pour définir la vitesse de rotation ou de déplacement dudit moyen de support et de maintien (6) et/ou dudit au moins un outil de travail (5a, 5b) autour dudit moyen de support et de maintien (6) comme une fonction du rayon ou du diamètre de ladite jante (W) communiquée à celle-ci ou calculée ainsi, d'une manière telle que ledit moyen moteur (M) définit, pour chaque rayon ou diamètre ou plage de rayons ou de diamètres de jantes, une vitesse de rotation respective pour ledit moyen de support et de maintien (6) et/ou pour ledit au moins un outil de travail (5a, 5b) autour dudit moyen de support et de maintien (6) inférieur à celui défini ou pouvant être défini pour les rayons ou les diamètres ou les plages de rayons ou de diamètres de jantes plus petites et supérieur à ceux qui sont définis ou qui peuvent être définis pour les rayons ou les diamètres ou les plages de rayons ou de diamètres de jantes plus grandes.

3. Machine selon la revendication 1 ou 2, ladite unité de commande électronique (7) étant définie pour commander ledit moyen moteur (M) de sorte que, quel que soit le rayon ou le diamètre des jantes (W) traitées dans la machine, ils demeurent sensiblement constants ou dans un quelconque cas présentant moins de 5 % ou de 10 % de variabilité de la vitesse périphérique relative entre le moyen de support et de maintien (6) et les outils de travail (5a, 5b, 5c) au niveau du bord externe à traiter des roues.

4. Machine selon l'une quelconque des revendications précédentes, ledit moyen (8) de détection du rayon ou du diamètre d'une jante (W) comprenant un encodeur, un potentiomètre, un compas d'épaisseur, une caméra, un laser et/ou un moyen de lecture d'une puce dans un pneumatique d'une roue à traiter.

5. Machine selon la revendication 4, ledit au moins un bras de retenue d'outil (4a, 4b, 4c) pivotant par rapport à ladite au moins une colonne (3) et/ou étant télescopique et ledit moyen de détection (8) comprenant un encodeur ou un potentiomètre défini pour détecter la position ou le mouvement dudit au moins un bras de retenue d'outil (4a, 4b, 4c) ou de l'extrémité ou d'une portion dudit bras de retenue d'outil auquel au moins un outil (5a, 5b, 5c) est supporté ou articulé ou la position ou le mouvement de l'outil (5a, 5b, 5c) lui-même.

6. Machine selon l'une quelconque des revendications précédentes, ledit moyen d'introduction ou de communication du rayon ou du diamètre d'une jante comprenant un clavier, une souris, une tablette, un téléphone intelligent et/ou un affichage à écran tactile.

7. Machine selon l'une quelconque des revendications précédentes, ladite unité de commande électronique (8) pour traiter les pneumatiques de véhicules
- pour un diamètre d'une jante d'environ 25,4 cm, étant définie pour commander le moyen moteur (M) afin de définir une vitesse de rotation pour le moyen de support et de maintien (6) égale à environ 17 à 21 révolutions par minute,
- pour un diamètre d'une jante d'environ 50,8 cm, étant définie pour commander le moyen moteur (M) afin de définir une vitesse de rotation pour le moyen de support et de maintien (6) égale à environ 8 à 12 révolutions par minute,
- pour un diamètre d'une jante d'environ 76,2 cm, étant définie pour commander le moyen moteur (M) afin de définir une vitesse de rotation pour le moyen de support et de maintien (6) égale à environ 4 à 7 révolutions par minute.

8. Machine selon l'une quelconque des revendications précédentes, ladite unité de commande électronique (8) pour traiter les roues d'un camion ou de véhicules de transport agricole
- pour un diamètre d'une jante d'environ 25,4 cm, étant définie pour commander le moyen moteur (M) afin de définir une vitesse de rotation pour le moyen de support et de maintien (6) égale à environ 12 à 18 révolutions par minute,
- pour un diamètre d'une jante d'environ 50,8 cm, étant définie pour commander le moyen moteur (M) afin de définir une vitesse de rotation pour le moyen de support et de maintien (6) égale à environ 6,5 à 8 révolutions par minute,
- pour un diamètre d'une jante d'environ 76,2 cm, étant définie pour commander le moyen moteur (M) afin de définir une vitesse de rotation pour le moyen de support et de maintien (6) égale à environ 4 à 6 révolutions par minute,
- pour un diamètre d'une jante d'environ 101,6 cm, étant définie pour commander le moyen moteur (M) afin de définir une vitesse de rotation pour le moyen de support et de maintien (6) égale à environ 3,75 révolutions par minute,
- pour un diamètre d'une jante d'environ 127 cm, étant définie pour commander le moyen moteur (M) afin de définir une vitesse de rotation pour le moyen de support et de maintien (6) égale à environ 3 révolutions par minute.

9. Machine selon l'une quelconque des revendications précédentes, comprenant au moins un inverseur (9) défini pour faire varier la fréquence d'alimentation d'énergie du moyen moteur (M), afin d'accroître ou de réduire la vitesse de rotation dudit moyen de support et de maintien (6) et/ou la vitesse de rotation dudit au moins un outil (5a, 5b, 5c) autour dudit moyen de support et de maintien (6), ledit au moins un inverseur (9) étant entraîné par ladite au moins une unité de commande électronique (7) comme une fonction des valeurs détectées par le moyen de détection (8) et/ou obtenues à partir dudit moyen d'introduction ou de communication (8a).

10. Machine selon la revendication 9, ledit au moins un inverseur (9) étant capable de faire varier la fréquence d'alimentation d'énergie dudit moyen moteur (M) afin d'obtenir trois, quatre, cinq, six valeurs de vitesse de rotation ou plus pour ledit moyen de support et de maintien (6) et/ou pour ledit au moins un outil (5a, 5b, 5c) autour dudit moyen de support et de maintien (6).

11. Procédé de traitement, tel que de montage et/ou de démontage, d'une roue à pneumatique avec une machine selon l'une quelconque des revendications précédentes, comprenant les étapes suivantes :
- verrouillage d'une jante (W) ou d'une roue à pneumatique (TW) sur le moyen de support et de maintien (6),
- détection ou introduction de la valeur du rayon ou du diamètre d'une jante (W) ou des données ou des informations corrélées ou pouvant être corrélées par l'unité de commande électronique (7) au rayon ou au diamètre d'une jante (W),
- ladite au moins une unité de commande électronique (7) commandant ledit moyen moteur (M) afin de faire varier ou de définir la vitesse de rotation ou de déplacement dudit moyen de support et de maintien (6) et/ou dudit au moins un outil de travail (5a, 5b, 5c) comme une fonction du rayon ou du diamètre de ladite jante (W) communiquée à celui-ci ou calculée ainsi.

12. Procédé selon la revendication 11, ladite au moins une unité de commande électronique (7) commandant le moyen moteur (M) de sorte que pour chaque rayon ou diamètre ou plage de rayons ou de diamètres le moyen moteur (M) définit une vitesse de rotation respective pour ledit moyen de support et de maintien (6) et/ou pour ledit au moins un outil de travail (5a, 5b) autour dudit moyen de support et de maintien (6) inférieure à celle définie ou pouvant être définie pour les rayons ou les diamètres ou les plages de rayons ou de diamètres de jantes plus petites et supérieure à celle définie ou pouvant être définie pour les rayons ou les diamètres ou les plages de rayons ou de diamètres de jantes plus grandes.

13. Procédé selon la revendication 11 ou 12, ladite étape de détection étant conduite à l'aide d'un encodeur, d'un potentiomètre, d'un compas d'épaisseur, d'une caméra, d'un laser et/ou d'un moyen de lecture d'une puce dans un pneumatique d'une roue à traiter.

14. Procédé selon la revendication 11, 12 ou 13 pour le traitement, tel que le montage et/ou le démontage, d'une roue à pneumatique d'un véhicule,
- pour un diamètre d'une jante d'environ 25,4 cm, ladite unité de commande (8) commandant ledit moyen moteur (M) de sorte qu'il définit une vitesse de rotation pour le moyen de support et de maintien (6) égale à environ 17 à 21 révolutions par minute,
- pour un diamètre d'une jante d'environ 50,8 cm, ladite unité de commande (8) commandant ledit moyen moteur (M) de sorte qu'il définit une vitesse de rotation pour le moyen de support et de maintien (6) égale à environ 8 à 12 révolutions par minute,
- pour un diamètre d'une jante d'environ 76,2 cm, ladite unité de commande (8) commandant ledit moyen moteur (M) de sorte qu'il définit une vitesse de rotation pour le moyen de support et de maintien (6) égale à environ 4 à 7 révolutions par minute.

15. Procédé selon la revendication 11, 12 ou 13 pour le traitement, tel que le montage et/ou le démontage, d'une roue à pneumatique d'un camion ou de véhicules de transport agricole,
- pour un diamètre d'une jante d'environ 25,4 cm, ladite unité de commande commandant ledit moyen moteur (M) de sorte qu'il définit une vitesse de rotation pour le moyen de support et de maintien (6) égale à environ 12 à 18 révolutions par minute,
- pour un diamètre d'une jante d'environ 50,8 cm, ladite unité de commande (8) commandant ledit moyen moteur (M) de sorte qu'il définit une vitesse de rotation pour le moyen de support et de maintien (6) égale à environ 6,5 à 8 révolutions par minute,
- pour un diamètre d'une jante d'environ 76,2 cm, ladite unité de commande commandant ledit moyen moteur (M) de sorte qu'il définit une vitesse de rotation pour le moyen de support et de maintien (6) égale à environ 4 à 6 révolutions par minute,
- pour un diamètre d'une jante d'environ 101,6 cm, ladite unité de commande commandant ledit moyen moteur (M) de sorte qu'il définit une vitesse de rotation pour le moyen de support et de maintien (6) égale à environ 3,75 révolutions par minute,
- pour un diamètre d'une jante d'environ 127 cm, ladite unité de commande commandant ledit moyen moteur (M) de sorte qu'il définit une vitesse de rotation pour le moyen de support et de maintien (6) égale à environ 3 révolutions par minute.
